# EUROPEAN PATENT SPECIFICATION

(11) **EP 3 906 166 B1**
(45) Date of publication and mention of the grant of the patent: **10.04.2024**
(21) Application number: 19839436.3
(22) Date of filing: 23.12.2019
(51) Int. Cl.: B60B 3/00, B60B 9/26, B60C 7/14, B60C 7/18, B60B 1/14, B60B 5/02

(54) **SPOKE FOR A NON-PNEUMATIC WHEEL**
SPEICHE FÜR EIN NICHTPNEUMATISCHES RAD
RAYON POUR ROUE NON-PNEUMATIQUE

(30) Priority: 31.12.2018 US 201862787061 P
(43) Date of publication of application: 10.11.2021
(73) Proprietor: COMPAGNIE GENERALE DES ETABLISSEMENTS MICHELIN, 63000 Clermont-Ferrand (FR)
(72) Inventor: ROTY, Gael, Greenville, South Carolina 29605 (US); DELFINO, Antonio, Givisiez (CH)
(74) Representative: Casalonga
(86) International application number: PCT/IB2019/061308
(87) International publication number: WO 2020/141409

(56) References cited:
- WO-A1-2017/072562
- WO-A1-2017/117598
- WO-A1-2018/115940

## Description

### FIELD OF THE INVENTION

The present invention relates to spoke for a non-pneumatic wheel.
In particular, the present invention relates to a spoke according to the preamble of claim 1, such as it is e.g. known from WO2017/072562A.

### BACKGROUND OF THE INVENTION

Non-pneumatic wheel constructions and their benefits are described in e.g., U.S. Pat. Nos. 6,769,465; 6,994,134; 7,013,939; and 7,201,194. Some non-pneumatic wheel constructions propose incorporating a shear band, embodiments of which are described in e.g., U.S. Pat. Nos. 6,769,465 and 7,201,194. Such non-pneumatic wheels provide advantages in wheel performance without relying upon a gas inflation pressure for support of the loads applied to the wheel.

In one example of a non-pneumatic wheel, a compliant band with a ground contacting portion can be connected with a plurality of tension-transmitting, web-like elements (i.e. spokes) extending radially from a center element or hub. For certain constructions, such non-pneumatic wheel may be formed by open cast molding in which a material such as e.g., polyurethane is poured into a mold that forms all or part of the non-pneumatic wheel. One or more inextensible reinforcement structures such as cords may be molded in place in the compliant band.

Typically, in such prior constructions, the spokes and the hub are molded as an integral, single-piece construction. Alternatively, the spokes may be integrally joined by a band that is then joined with a hub or wheel center. In either construction, the spokes are not readily removable from either the radially-outer end attached with the compliant band or the radially inner end attached to the hub or wheel center.

The construction of the spokes can affect the performance of the non-pneumatic wheel. Spokes constructed from different sizes, configurations, and materials of construction can affect the way tension is transmitted between the wheel hub and the compliant band, leading to differences in load carry capabilities of the non-pneumatic wheel and perceived handling characteristics. The density of the spokes can also determine e.g., how much tension each spoke carries as it rotates to the top of the wheel during operation.

The use of inextensible reinforcement structures, such as cords, within the spokes of the non-pneumatic wheel provides additional reinforcement within the spoke but may lead to additional stress at the axial edges of the spokes near the ends of the reinforcement structures. Such increased stress may lead to premature failure of the spoke, or spoke attachment. The spoke reinforcement also can lead to increased lateral stiffness of the wheel, which the wheel designer may find desirable to reduce.

Accordingly, a spoke for a non-pneumatic wheel that can be more readily molded with reinforcements, various shapes, one or more layers of material, and have reduced stress and/or stiffness at the radial ends and edges of the spoke may be desirable. A method of manufacturing such a wheel spoke would also be beneficial.

### SUMMARY OF THE INVENTION

The above problems are solved by a spoke according to independent claim 1. The dependent claims relate to advantageous embodiments. The present invention provides an exemplary spoke for a non-pneumatic wheel. The spoke can be manufactured with a reinforcement structure having reinforcement elements and one or more layers of material. The spoke can also be provided in various shapes and configurations. The spoke includes anchors that allow the spoke to be more readily incorporated into, or removed from, a non-pneumatic wheel. More particularly, the anchors also allow the spoke to be joined as one-piece with the non-pneumatic wheel or releasably connected on one or both ends with the non-pneumatic wheel. Additional objects and advantages of the invention will be set forth in part in the following description, or may be apparent from the description, or may be learned through practice of the invention.

In one exemplary embodiment of the present invention, a spoke for a non-pneumatic wheel is provided. The wheel defines radial, axial, and circumferential directions. The spoke includes a web-like body extending along the radial direction between a radially-outer end and a radially inner end and extending along an axial direction between opposing edges of the web-like body.

The web like body includes a reinforcement structure extending along the radial direction and being formed by an outer fold at the radially-outer end and an inner fold at the radially-inner end. An outer anchor is positioned at the radially outer end and includes an outer pair of arms extending in an opposing manner along the circumferential direction away from the web-like body. An inner anchor is positioned at the radially inner end and includes an inner pair of arms extending in an opposing manner along the circumferential direction away from the web-like body.

The reinforcement structure may include a plurality of inextensible cords extending between the radially-outer end and the radially-inner end. The reinforcement structure may also include at least one pair of layers comprising a polymeric material, wherein the layers extend between the radially-outer end and the radially inner end with the inextensible cords embedded between the layers.

The spoke may also include an outer elongate rod positioned within the outer fold of the reinforcement structure; and an inner elongate rod positioned within the inner fold of the reinforcement structure. The inner elongate rod and the outer elongate rod may each extend along the axial direction between the opposing edges of the web-like body.

In another embodiment, the spoke may include a plurality of inextensible cords extending between the radially-outer end and the radially-inner end. A first pair of layers may include a first polymeric material, wherein the first pair of layers extend between the radially-outer end and the radially-inner end with the inextensible cords embedded between the first pair layers. A second pair of layers may include a second polymeric material, wherein the second pair of layers extend between the radially-outer end and the radially-inner end. The first polymeric material may have an elongation modulus MA10 measured at 10 percent elongation and at a temperature of 23 °C that is in the range of 1 to 10 MPa. The second polymeric material may have an elongation modulus MA10 measured at 10 percent elongation and at a temperature of 23 °C that is in the range of 1 to 5 MPa.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a side view of an exemplary non-pneumatic wheel incorporating an exemplary embodiment of a spoke of the present invention.
FIG. 2 provides a cross-sectional view of the exemplary non-pneumatic wheel taken along line 2-2 of FIG. 1.
FIG. 3 illustrates a perspective view of an exemplary embodiment of a web spoke of the present invention can be used in the exemplary non-pneumatic wheel of FIG. 1.
FIG. 4 is an end view of the exemplary web spoke of FIG. 3.
FIG. 5 is an end view of another exemplary web spoke.
FIG. 6 is an end view of yet another exemplary web spoke.
FIG. 7 is an end view of yet another exemplary web spoke.
FIG. 8 provides a close-up, cross-sectional end view of the radially-outer end of an exemplary spoke of the present invention.
FIG. 9 provides a front view of an exemplary precursor used in making the exemplary spoke of FIG. 3.
FIG. 10 provides a front view of an exemplary precursor used in making the exemplary spoke of FIG. 3.
FIG. 11. is a perspective view of exemplary intermediates used in making the exemplary spoke of FIG. 3.
FIG. 12 illustrates aspects of an exemplary method used in making the exemplary spoke of FIG. 3.
FIGS. 13, 14, and 15 illustrate additional aspects of an exemplary method of the present invention while also depicting a top view of a mold portion (FIG. 13), a perspective end view of the mold portion (FIG. 14), and a perspective end view of another mold portion (FIG. 15).
FIG. 16 is a perspective end view illustrating the mold portions joined together with an exemplary web spoke molded therebetween.
FIG. 17 is a close-up, cross-sectional end view of the radially-outer end of another exemplary spoke.
FIG. 18 shows a finite element simulation of a spoke web comprising inextensible reinforcement extending along its radial length and spaced apart its axial width and a spoke web having the reinforcements closest to the radial edge segmented along their length.
FIG. 19 illustrates a side view of yet another exemplary non-pneumatic wheel incorporating an exemplary embodiment of a spoke of claim 18.
FIG. 20 shows a spoke split into multiple segments that together span laterally across the wheel.
FIG. 21 shows a spoke split into multiple segments that together span laterally across the wheel but connected at the radially outer anchor portion of the spoke.
FIG. 22 shows a view of the hub of the wheel along the radial direction.
FIG 23 shows a front view of an exemplary precursor used in making the exemplary spoke of FIG. 22.

### DETAILED DESCRIPTION

For purposes of describing the invention, reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention as defined by the appended claims.

For instance, features illustrated or described as part of one embodiment, can be used with another embodiment to yield a still further embodiment.

As used herein, the following definitions apply.

Axial direction A refers to a direction parallel to an axis about which a referenced exemplary wheel rotates during use.

Radial direction R refers to a direction perpendicular to axial direction A with radially-outer or radially outward referring to a general direction away from axial direction A, and radially-inner or radially inward referring to a general direction towards axial direction A.

Circumferential direction C refers to a direction defined by defined by the circumference of the wheel or the direction of its rotation about an axis.

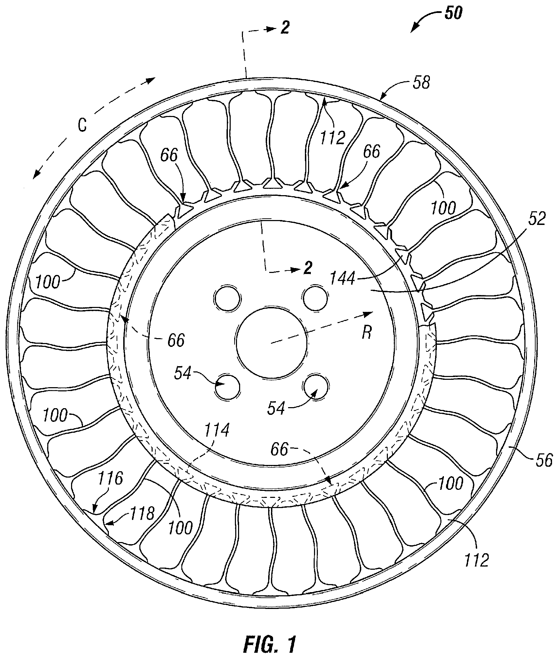

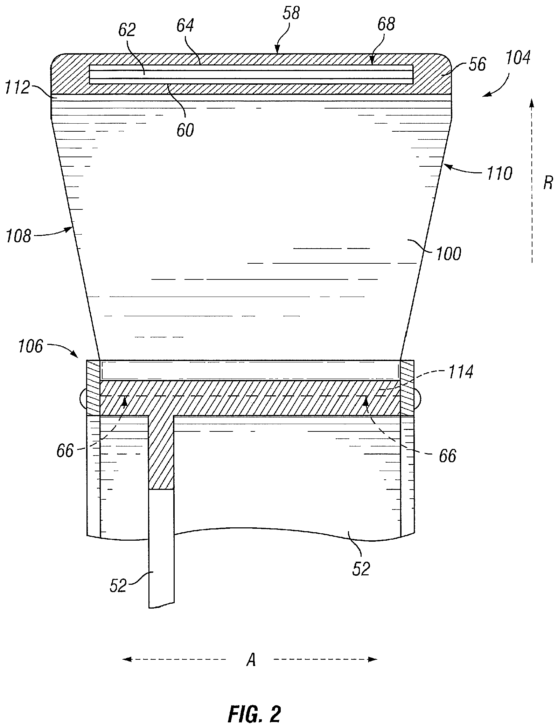

FIG. 1 provides a side view of an exemplary non-pneumatic wheel 50 that can be manufactured using the present invention while FIG. 2 provides a cross-sectional view of wheel 50 taken along a meridian plane at line 2-2 in FIG. 1. The present invention is not limited to the particular shape, size, or appearance of the wheels shown in the figures. As will be understood using the teachings disclosed herein, wheels of other shapes, sizes, and appearances may be used as well.

Non-pneumatic wheel 50 includes a wheel hub 52 provided with a series of apertures 54 through which threaded lugs or other fasteners may be inserted in order to mount wheel 50 onto a vehicle. Other mounting configurations may be used as well. Non-pneumatic wheel 50 also includes a compliant, load supporting band 56 positioned radially outward of a hub 52 and positioned concentrically with hub 52. A tread 58 may be formed on, or provided as part of, load supporting band 56. For example, tread band 58 may be adhered to load supporting band 56, embedded therein, or formed integrally as shown in FIG. 2. Other constructions may be used as well.

A plurality of tension-transmitting web elements or spokes 100 extend along the radial direction R between hub 52 and load supporting band 56. Spokes 100 are adjacent to one another and spaced apart about circumferential direction C of wheel 50. Spokes 100 may have other shapes and configurations from what is shown in FIGS. 1 and 2. Spokes 100 may also be formed at various angles from radial direction R, Using shear band 68, load supporting band 56 supports loads transmitted to non-pneumatic wheel 50 when mounted to a vehicle using mounting disk 52. The load is transmitted by tension through spokes 100 to compliant band 56. In one exemplary embodiment, as wheel 50 rotates, spokes 100 are in tension as they reach the top of the wheel at a position away from the contact patch while spokes 100 near the contact patch may experience minimal tension and may even slightly buckle or bend.

By way of example, load supporting band 56 may be constructed to include shear band 68 having an inner reinforcing band 60, outer reinforcing band 64, and a shear layer 62 positioned therebetween. Shear layer 62 may be constructed e.g. of an elastomeric material such as e.g., natural and synthetic rubbers, polyurethanes, foamed rubbers and polyurethanes, segmented copolyesters, and block co-polymers of nylon. The reinforcing bands 60, 64 may include reinforcements constructed from e.g., essentially inextensible cord reinforcements embedded in an elastomeric coating. Such reinforcements may include e.g., any of several materials suitable for use as wheel belt reinforcements in conventional wheels such as cords of steel, composites of glass and resin such as e.g., fiberglass reinforced polymer, and other materials having a high modulus in tension and compression. Other constructions and materials may be used as well.

Referring now to FIGS. 2, 3, and 4, spoke 100 includes a web-like body 102 extending along the radial direction R. Arrow R points along a radial direction and from radially-inward to radially-outward when used in reference to the position and orientation of spoke 100 or its components within non-pneumatic wheel 50 (FIG. 1). Along radial direction R, web-like body 102 extends between a radially outer end 104 and a radially-inner end 106. Along axial direction A, web-like body 102 extends between opposing edges 108 and 110.

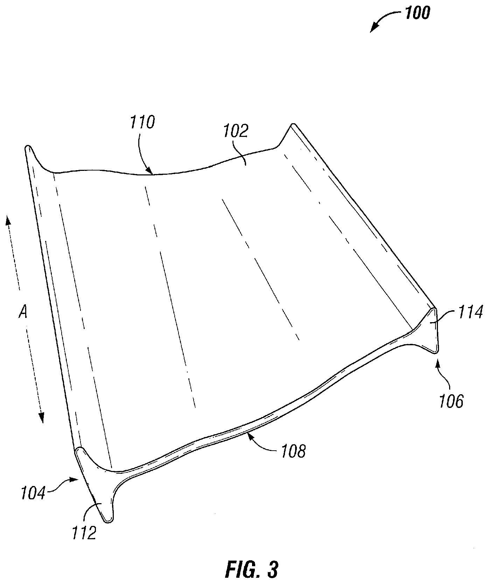

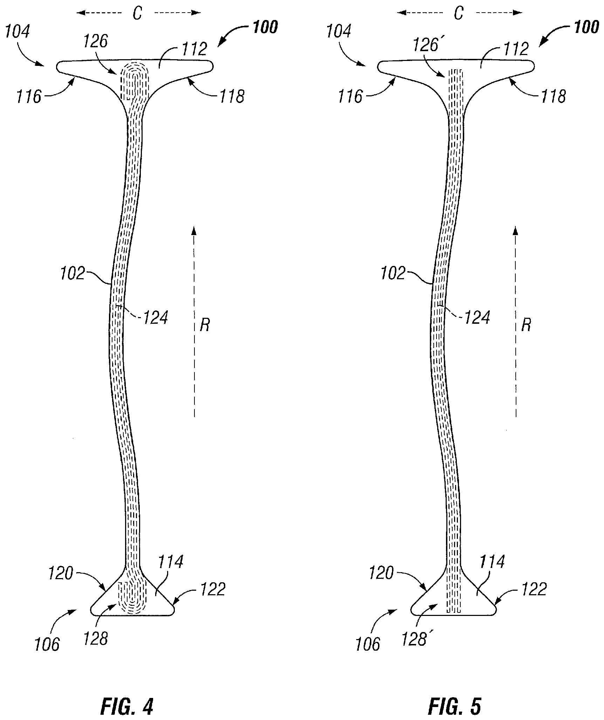

The radially outer end 104 of web-like body 102 forms an outer anchor 112 while the radially-inner end 106 forms inner anchor 114 (FIG. 4). For this exemplary embodiment, outer anchor 112 includes an outer pair of arms 116 and 118 that extend in an opposing manner or away from each other and body 102 along circumferential direction C. Similarly, inner anchor 114 includes an inner pair of arms 120 and 122 that extend in opposing manner or away from each other and body 102 along circumferential direction C. The present invention is not limited to the particular shape for web spoke 100 shown in the figures and other shapes and configurations may also be used. For example, while web spoke 100 has a familiar "I" shape as shown in FIG. 3 with triangular portions for anchors 112 and 114, other shapes can be used as well. For example, the anchors may have a rectangular cross sectional shape, or alternatively a circular cross sectional shape or alternatively a bulbous shape.

Anchors 112 and 114 provide versatility to the use of spoke 100 and its integration into wheel 50. For example, as shown in FIGS. 1 and 2, inner anchor 114 is removably installed within an axially-oriented slot or groove 66 of hub 52. During manufacture, inner anchor 114 can be readily slid along axial direction A or otherwise inserted into groove 66. Such construction also allows hub 52 to be readily substituted in the event of a desired change, repair, or otherwise.

For this exemplary embodiment, outer anchor 112 is attached to load support band 56. A variety of methods may be used to attach band 56 and outer anchor 112. For example, outer anchor 112 may be mechanically fastened or adhered to band 56. Alternatively, outer anchor 112 could be integrally formed with band 56. Other constructions may also be used.

Referring to FIG. 4, web-like body 102 includes a reinforcement structure 124. As shown, reinforcement structure 124 extends along radial direction R between radially-outer end 104 and radially-inner end 106. At radially-outer end 104, reinforcement structure 124 is provided with an outer fold 126. At radially-inner end 106, reinforcement structure 124 includes an inner fold 128. Folds 126 and 128 provide strength to spoke 100 while also helping secure the ends of reinforcement structure 124 in anchors 112 and 114. As such, folds 126 and 128 help reinforcement structure 124 ensure that the tensile forces experienced by web spoke 100 as it rotates away from the contact patch (the area of tread 58 in contact with the ground) and moves to the top of wheel 50 during use are transmitted between hub 52 and compliant band 56.

In other embodiment, as shown in FIG. 5, reinforcement structure 124 at the radially-outer end 104 terminates without a fold 126'. At radially-inner end 106, reinforcement structure 124 terminates without a fold 128'. The radially-outer end 104 and radially inner end 114 without a fold 126', 128' simplifies the process of constructing the spokes.

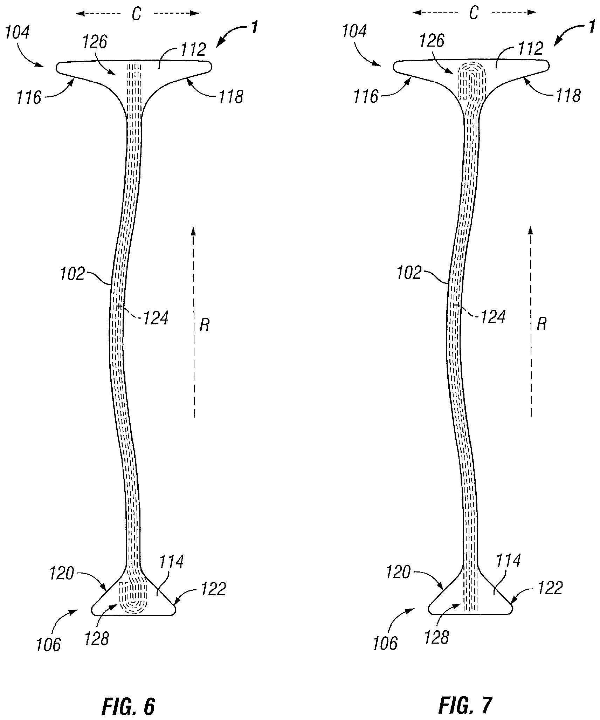

In other embodiment, as shown in FIG. 6, reinforcement structure 124 at the radially-outer end 104 terminates without a fold 126'. At radially-inner end 106, reinforcement structure 124 includes an inner fold 128. The radially-outer end 104 without a fold 126' likewise simplifies the process of constructing the spokes. Fold 128 provides strength to spoke 100 while also helping secure the ends of reinforcement structure 124 in anchor and 114. As such, folds 128 help reinforcement structure 124 ensure that the tensile forces experienced by web spoke 100 as it rotates away from the contact patch (the area of tread 58 in contact with the ground) and moves to the top of wheel 50 during use are transmitted between hub 52 and compliant band 56.

In yet another embodiment, as shown in FIG. 7, reinforcement structure 124 at the radially-outer end 104 includes and outer fold 126. At radially-inner end 106, reinforcement structure 124 terminates without a fold 128'. The radially-inner end 104 without a fold 128' simplifies construction. Fold 126 provides strength to spoke 100 while also helping secure the ends of reinforcement structure 124 in anchor and 112. As such, fold 126 help reinforcement structure 124 ensure that the tensile forces experienced by web spoke 100 as it rotates away from the contact patch (the area of tread 58 in contact with the ground) and moves to the top of wheel 50 during use are transmitted between hub 52 and compliant band 56.

For these exemplary embodiments, as depicted in FIGS. 4 to 8, reinforcement structure 124 includes a plurality of elongate, reinforcement elements 130. In one exemplary embodiment, reinforcement elements 130 are provided as inextensible cords 130 extending adjacent and parallel to each other along radial direction R. More particularly, for this embodiment, reinforcement elements 130 have a length that extends along radial direction R - i.e. reinforcement elements 130 extend longitudinally along radial direction R. Other orientations may be used.

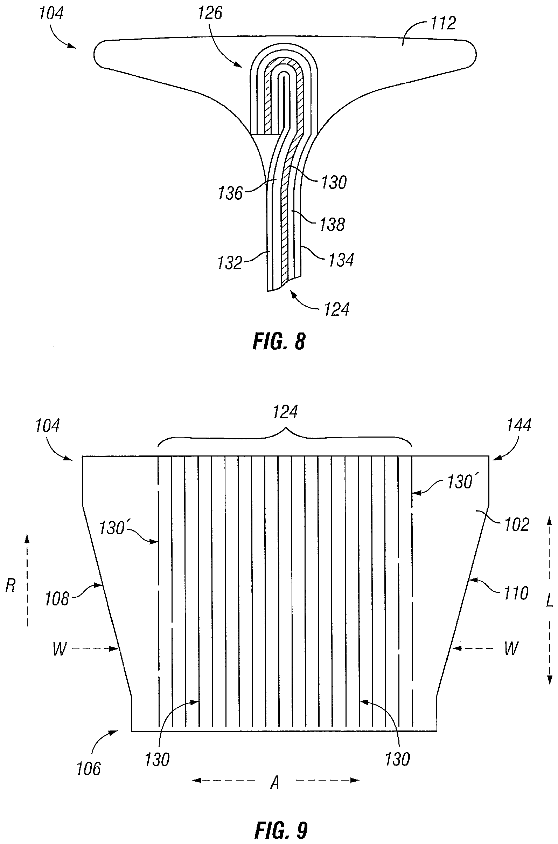

For one exemplary embodiment, as used herein, "inextensible" means the material has an elongation at break of 12 percent or less as measured at 23 °C according to ASTM 885. By way of example, cords 130 may be constructed from nylon, steel, combinations thereof, and other materials as well. Cords 130 may be positioned across the entire axial width W of web-like body 102 so that cords 130 are near edges 108 and 110 (FIGS. 7 and 8) or, alternatively, may be positioned across only a portion of width W such that cords 130 are spaced apart from edges 108 and 110 (FIG. 6). The axial width direction is also referred to as the "lateral width" herein. When referring to a specific component, such as a precursor material used to construct a spoke, indications of direction, such as the radial direction, circumferential direction, lateral direction or axial direction, are used as the precursor material or wheel component is attached to the wheel in its finished position.

Referring to FIG. 8, reinforcement structure 124 can include a plurality of layers of polymeric material to form web-like body 102 as well. For example, in one exemplary embodiment, reinforcement structure 124 includes at least one pair of layers of polymeric material 136 and 138 with inextensible cords 130 embedded or sandwiched between layers 136 and 138. Layers 136 and 138 extend between the radially-outer end 104 and radially-inner end 106 and, therefore, have substantially the same length and shape as reinforcement structures 124.

For this exemplary embodiment, layers 136 and 138 form a first pair of layers immediately adjacent to cords 130 and a second pair of layers 132 and 134 are positioned outside of first pair of layers 136, 138. As with layers 136 and 138, layers 132 and 134 extend between the radially-outer end 104 and radially inner end 106 and, therefore, have substantially the same length and shape as reinforcement structures 124. Layers 132, 134, 136, and 138 are folded at radially-out ends 104 and 106 as shown in FIG. 4.

Various materials can be used for layers 132, 134, 136, and 138. In one exemplary embodiment of the invention, first pair of layers 136, 138 are constructed from a first polymeric material while second pair of layers 132, 134 are constructed from a second polymeric material. For example, the first polymeric material may have e.g., an elongation modulus MA10 (according to ASTM D412) measured at 10 percent elongation and at a temperature of 23 °C that is in the range of 1 to 10 MPa (megapascals). The second polymeric material may have e.g., an elongation modulus MA10 (according to ASTM D412) measured at 10 percent elongation and at a temperature of 23 °C that is in the range of 1 to 5 MPa. The first and second polymeric materials may be constructed of elastomeric materials that are tacky such that e.g., they will self-adhere or stick to themselves and/or each other during manufacture.

Various materials may be used for outer anchor 112 and inner anchor 114. For example, outer anchor 112 may be constructed from a polymeric material having e.g., an elongation modulus MA10 (according to ASTM D412) measured at 10 percent elongation and at a temperature of 23 °C that is in the range of 10 to 30 MPa (megapascals). Inner anchor 114 may be constructed from a polymeric material having e.g., an elongation modulus MA10 (according to ASTM D412) measured at 10 percent elongation and at a temperature of 23 °C that is in the range of 20 to 60 MPa (megapascals).

A variety of shapes may be used for web-like body 102. For example, as shown in FIG. 9, web-like body 102 has a width W that increases along radial direction R moving from the radially-inner end 106 to radially-outer end 104. In other embodiments, width W may decrease, remain constant, or vary. Additionally, the thickness T of web-like body 102 along circumferential direction C may be uniform like the embodiments shown in FIGS. 3-7 or may vary along radial direction R.

Here, the reinforcements 130 are shown as extending longitudinally along the radial direction R from the radially inner end 104 to the radially outer end 106 extending along the length L of web like body 102. The reinforcements 130 are spaced apart in the axial direction A and oriented parallel to one another. In the embodiment shown in FIG. 9, one or more of the reinforcements at the edges 108, 110 of the spoke are segmented and otherwise non-continuous as they span from one end 104 of the spoke to the other end 106 of the spoke. In this embodiment the web like body 102 increases in width W as it extends to the radially outer end 104 and the portion of the web like body 102 at the outer edges 108, 110 near the radially outer end lack reinforcement 130.

The segmented reinforcement 130' proximate to the lateral edges 108, 110 of the spoke 100 reduce the stress concentration at the radial ends 104, 106 of the web. This increases the durability of the spoke and may also be used to tune the handling characteristics of the vehicle wheel.

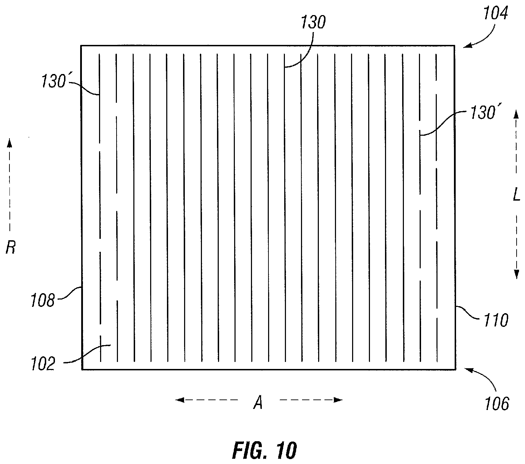

As mentioned above, and as shown in the embodiment in FIG. 10, web-like body 102 may alternatively have a width W that remains constant along radial direction R moving from the radially-inner end 106 to radially-outer end 104. As with the previous embodiment in FIG. 9, the embodiment shown in FIG. 10 possesses segmented reinforcements at the lateral edges 108, 110 of the web like body 102. The segmented reinforcements 130' may be formed by cutting the reinforcements 130 after being embedded in the polymeric material comprising the web-like body 102. Alternatively the segmented reinforcement 130 may cut and then embedded in the polymeric material. The cutting may be accomplished by a blade, laser or any other method as known in the art.

An exemplary method of manufacturing a spoke, such as e.g., spoke 100, for a non-pneumatic will now be set forth. Using the teachings disclosed herein, one of skill in the art will understand that the exemplary method may be used with other exemplary aspects of the invention as well to provide additional exemplary methods. As used herein, the term "method" or "process" refers to one or more steps that may be performed in other ordering than shown without departing from the scope of the presently disclosed invention. Any sequence of steps is exemplary and is not intended to limit methods described herein to any particular sequence, nor is it intended to preclude adding steps, omitting steps, repeating steps, or performing steps simultaneously. As used herein, the term "method" or "process" may include one or more steps performed at least by one electronic or computer-based apparatus having a processor for executing instructions that carry out the steps.

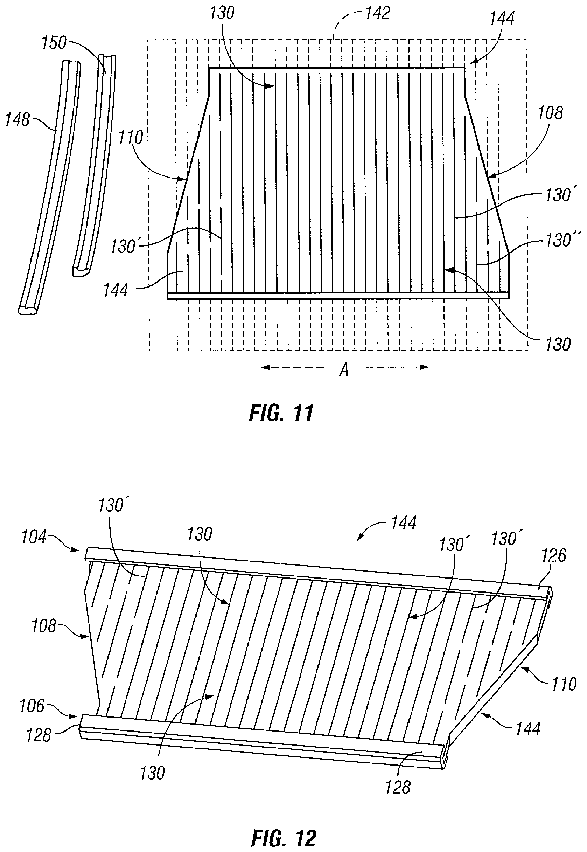

In one exemplary aspect, a method of manufacturing a spoke - such as web spoke 100 - for a non-pneumatic wheel is provided. Referring to FIG. 11, one or more sheets 142 of polymeric material are provided from which a precursor 144 (FIG. 12) of the web-like body 102 is formed by cutting sheets 142 in the shape desired. For example, sheet 142 may include sheets stacked or sandwiched together to provide layers 132, 134, 136, and 138 as described with regard to FIG. 8 - with elongate reinforcement elements 130 positioned between layers 136 and 138. Sheet 142 may be arranged such that the reinforcement elements 130 are positioned along radial direction R.

FIG. 11 also depicts outer anchor strips 148 and 150 that will be joined with precursor 144 as described later. In one exemplary aspect, the layers forming sheet 142 and used to form precursor 144 include one or more uncured, rubber materials. For example, the first and second polymeric materials used in layers 132, 134, 136, and 138 may initially include uncured rubber where these layers are not cross-linked to one another.

After the reinforcements 130 have been positioned between the layers, 136, and 138, the reinforcements 130 adjacent to the lateral edges 108, 110 are cut to create segmented reinforcements 130'. Alternatively, the reinforcements may be cut prior to being positioned between the layers, or may be cut at a later step in the process of building the spoke. As shown in FIG. 11 and 12, the reinforcements 130 closest to the lateral edges 108, 110 of the spoke may not extend completely from the radially inner end 106 to the radially outer end 104 of the spoke precursor 144. In the current embodiment, a plurality of the reinforcements 130 that do not extend completely from the radially inner end 106 to the radially outer end 104 are segmented, but some are not. In other embodiments, these outer reinforcements 130 that do not extend completely from the radially inner end 106 to the radially outer end 104 of the spoke precursor 144 may all be segmented, or, alternatively, may all be not segmented.

As shown in FIG. 12, after cutting precursor 144 from sheet 142, a radially-outer end 104 is folded to form outer fold 126 in precursor 144. Similarly, a radially-inner end 106 is folded to form inner fold 128 in precursor 144. The references to radially-outer and radially-inner are with regard to the position such features will occupy within non-pneumatic wheel 50. In one exemplary embodiment, the materials used to form the outer layers 132 and 134 of precursor 144 are tacky or self-adhering. As such, folds 126 and 128 can be readily created by folding and pressing ends 104 and 106 back against precursor 144. A tool having e.g., an edge or flat surface can be used to help press precursor 144 and create folds 126 and 128.

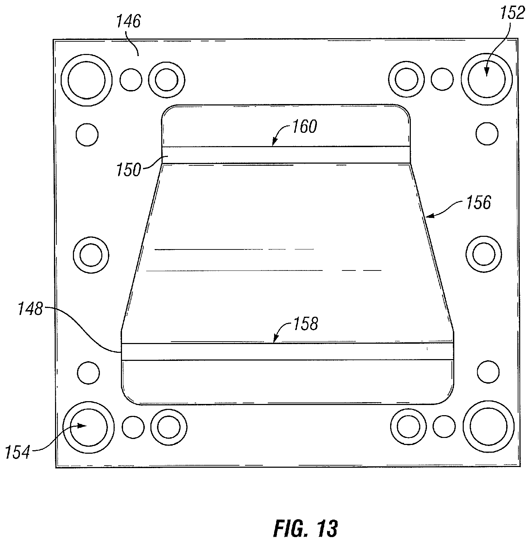

FIG. 13 provides a top view of a first mold portion 146 defining a recess 156. Recess 156 includes an axially-oriented groove 158 into which outer anchor strip 148 is placed. Recess 156 also includes an axially-oriented groove 160 (shown here as parallel to groove 158) into which an inner anchor strip 150 is placed. A tool having an edge or other flat surface can be used to press strips 148 and 150 into their respective grooves 158 and 160, respectively. Strips 148 and 150 form a portion of outer anchor 112 and inner anchor 114, respectively.

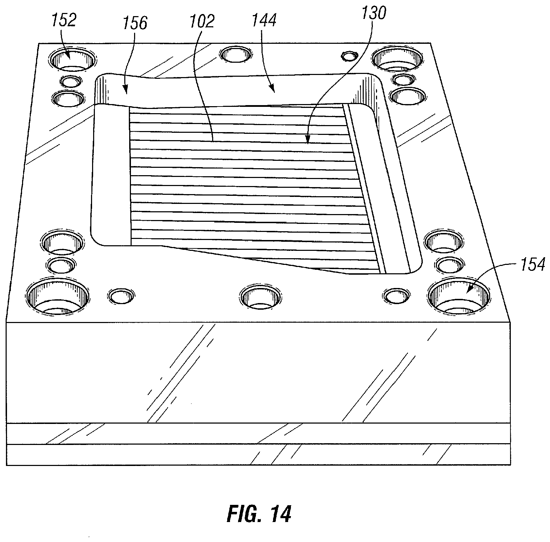

Referring to FIG. 14, after positioning anchor strips 148 and 150, precursor 144 (which will form web-like body 102) is placed into recess 156 of first mold portion 146. Precursor 144 is carefully pressed into contact with strips 148 and 150 and against the molding surfaces of first mold portion 146. A tool having e.g., an edge or flat surface can be used to help press precursor 144 against strips 148 and 150. As shown, precursor 144 has an overall shape that matches with the shape of recess 156.

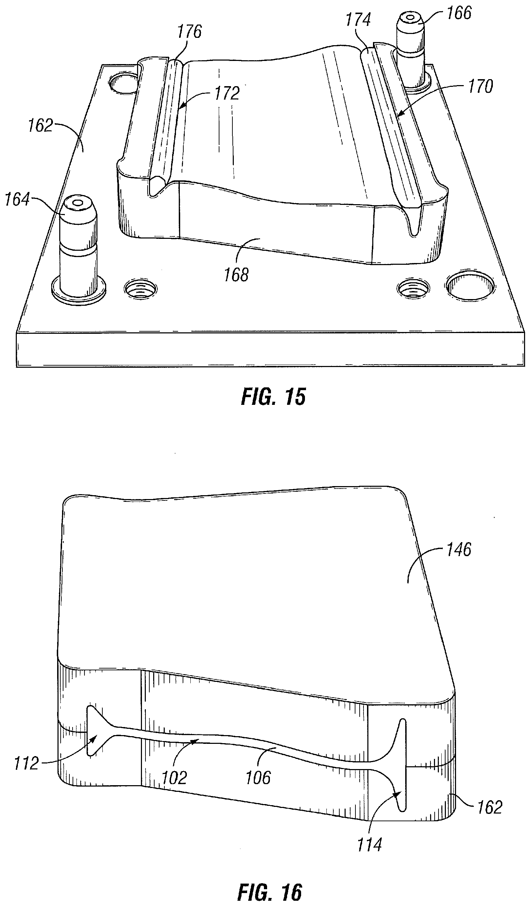

As illustrated in FIG. 15, a second mold portion 162 is provided with a relief or projection 168 that mates in complementary fashion with recess 156 in first mold portion 146. Second mold portion 162 also includes posts 164 and 166 that are inserted into openings 152 and 154 of first mold portion 146 when portions 146 and 162 are combined and pressed. Projection 168 defines a pair of parallel grooves 170 and 172.

Another outer anchor strip 174 is placed into axially-oriented groove 170 and another inner anchor strip 176 is placed into axially-oriented groove 172. A flat edge or other tool can be used to tightly press strips 174 and 176 into grooves 170 and 172. Strips 174 and 176 form a portion of anchors 112 and 114, respectively.

As shown in FIG. 16, first mold portion 146 and second mold portion 164 are joined together so as to combine precursor 144 and all anchor strips 148, 150, 174, and 176. Heat is applied to mold portion 146 and 164 so as heat precursor 144 and all anchor strips 148, 150, 174, and 176. Pressure may also be applied to squeeze mold portions 146 and 164 together during such heating and thereby press the materials contained therein. In one exemplary embodiment, the application of heat and pressure is maintained until the precursor 144 and all anchor strips 148, 150, 174, and 176 are joined and cross-linked together to form an integral web spoke 100. For example, in one exemplary embodiment, heat is maintained until a temperature of 150°C to 180°C is achieved for at least a period of 10 to 20 minutes. After allowing sufficient time for curing, web spoke 100 can be removed from mold portions 146 and 164.

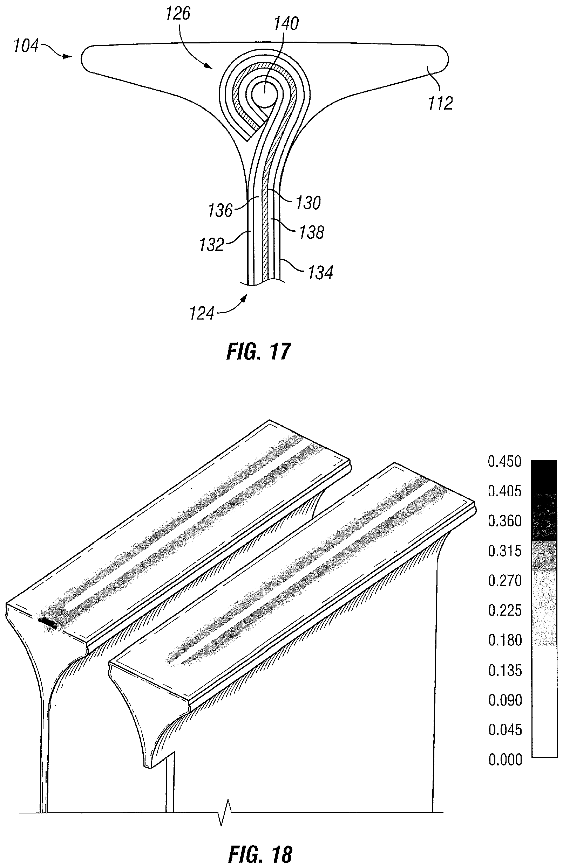

In alternative embodiments, an elongate rod 140 is positioned within at least one fold of the web-like body 102. In the embodiment shown in FIG. 17, the reinforcements 130 within the web like body 102 are folded around an elongate rod 140 comprised of a fiber reinforced polymer at the radially outer end 104 of the spoke. The elongate rod 140 extend along the axial direction between the opposing edges of the web-like body 102. The elongate rod 140 may be positioned within a fold at the radially inner end 106, the radially outer end 104, or both at the radially inner end 106 and the radially outer end 104. Such rods can be constructed from e.g., metal, fiberglass-reinforced composites, or combinations thereof. Rods within folds 126 and 128 provide additional support for securing folds 126 and 128 in anchors 112 and 114.

The segmentation of the web spoke reinforcements 130 at the lateral edges 108, 110 of the spoke 100 reduces stress concentrations near the radial inner and radial outer ends of the spoke anchors 112, 114. The spoke on the right in FIG. 18 shows a finite element model of a spoke web comprising inextensible reinforcement extending along the radial length and spaced apart its axial width. The finite element model of the spoke on the left in FIG. 18 shows model of a spoke web comprising the inextensible reinforcements 130 closest to the radial edge segmented 130' along their length. The segmented reinforcements 130 allow a reduction of stress while simplifying the construction of the precursor 144 and resulting spoke 100.

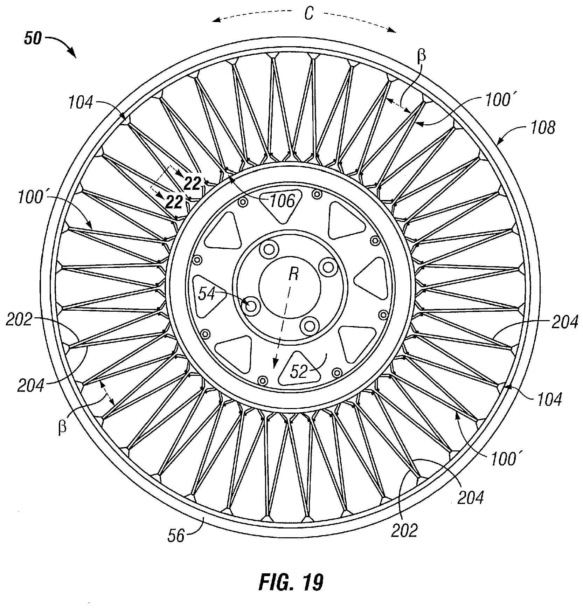

The spokes 100 in the embodiments above span the axial width of the wheel 50. Alternatively the wheel 50 may have a plurality of spokes 100' which do not span the axial width of the wheel. Instead the spokes 100' may be formed in multiple segments and then positioned so as to span from the inner hub to the outer compliant band 56 at an angle from the radial plane as shown in FIG. 19. Alternatively the spokes 100' may be formed in a single segment, then cut through their thickness in the radial direction into a plurality of segments and then positioned so as to span from the hub to the outer compliant band 56. For example, the spoke's 100' center spoke segment 204, shown in the embodiment in FIG. 19, each are positioned at an angle β to the adjacent spoke's 100' laterally outer spoke segment 202.

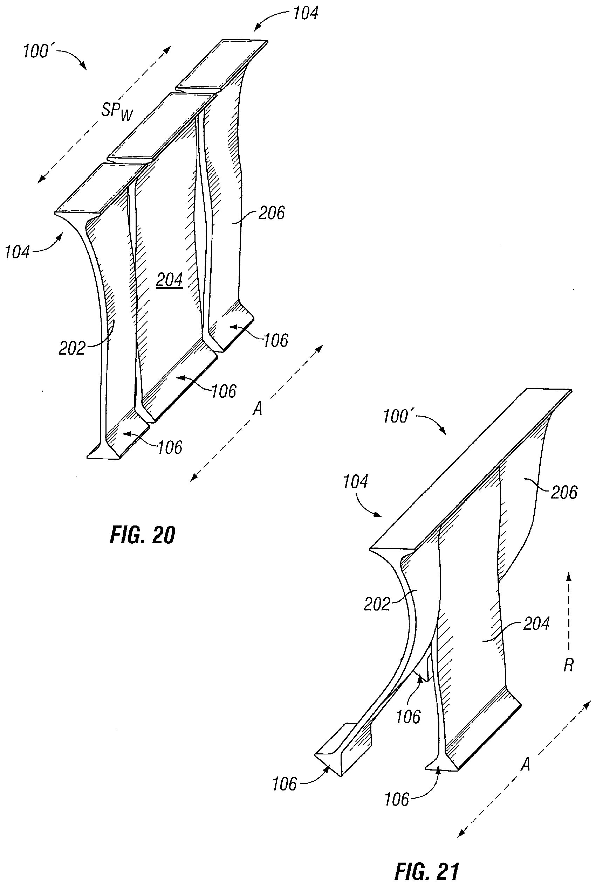

The spokes 100' may be each divided into a plurality of spokes 100 as shown in FIG. 20 or may be partially divided into a plurality of spokes 100 as shown in FIG 21 where the spoke 100' is joined at the radially outer end 104.

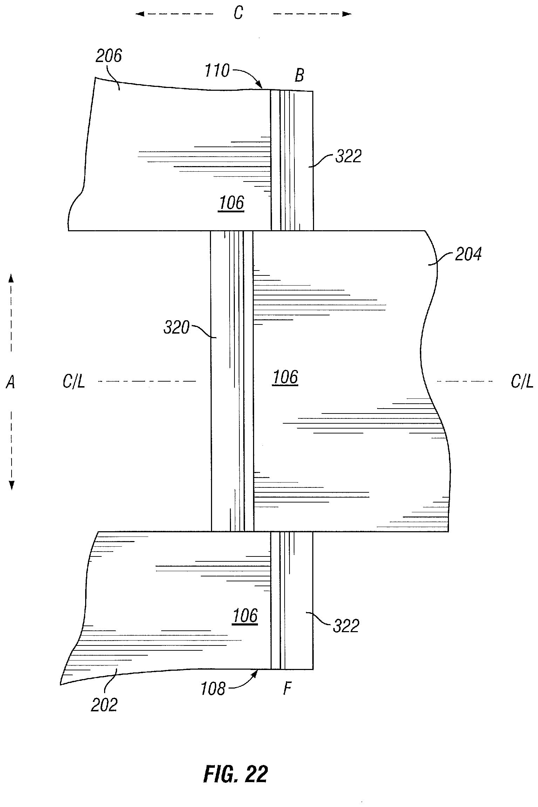

FIG. 22 shows a view in the radial direction taken on line 22 - 22 in FIG. 19 showing a single spoke 100' laying in two directions, with the outer spoke segments 202, 206 angled to the left of the picture and the center spoke segment 204 angled to the right of the picture. It should be understood that in alternative embodiments more spoke segments across the axial width may be used or fewer for each spoke. In the embodiment shown here, the spoke is divided into three segments. In this embodiment the radially inner end 106 is retained to the hub by a series of flanges 320, 322 which partially envelop the spoke anchor at the radially inner end 106.

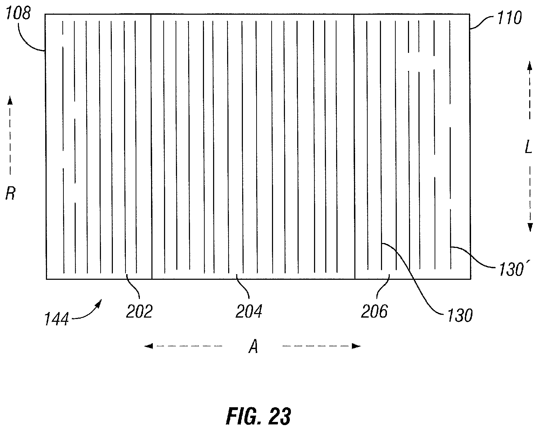

FIG. 23 shows the web precursor 144 split into three segments, as shown in the figure, a left spoke segment 202, a center spoke segment 204 and a right spoke segment 206. Notable, the reinforcements 130 near the left lateral edges 108 of the left spoke segment 202 and reinforcements 130 near the right lateral edge 110 of the right spoke segment 206 are segmented reinforcements 130'. The spoke reinforcements in this embodiment near the right and left edges of the center spoke segment are not segmented. In alternative embodiments, the reinforcements adjacent to the right and left edges of the center spoke segment 204 may be segmented. In yet other alternative embodiments, the segments near the right edge of the left spoke segment 202 and the segments near the left edge of the right spoke segment 206 may also be segmented. In yet another alternative embodiment, at least one reinforcement adjacent to each spoke segment is segmented.

The present invention is not limited to the particular shapes or configurations of mold portions 146 and 164. Others may be used to provide e.g., different shapes and configurations for web spoke 100.

In an alternative, exemplary aspect of the present invention, web spoke 100 or embodiments thereof may be manufactured from e.g., polyurethane or silicone elastomers. Various molding processes may be used to manufacture web spoke 100 from such materials including e.g., injection molding, compression molding, or casting. For example, in an injection molding process, reinforcements 130 would be placed in a mold in the shape of web spoke 100. The mold would then be injected with e.g., polyurethane or silicone elastomers. After the materials are allowed to cure, the web spoke 100 would be removed from the mold.

## Claims

1. A spoke (100) for a non-pneumatic wheel (50) defining radial, axial, and circumferential directions (A, R, C), the spoke (100) comprising:
a web-like body (102) extending along the radial direction (R) between a radially-outer end (104) and a radially inner end (106) and extending along an axial direction (A) between opposing edges (108, 110) of the web-like body (102), the web like body (102) comprising a reinforcement structure including a plurality of elongate, reinforcement elements (130) extending parallel to each other extending between the radially-outer end (104) and the radially-inner end (106);
an outer anchor (112) positioned at the radially outer end (104); and
an inner anchor (114) positioned at the radially inner end (106);
**characterized in that** at least one reinforcement element of the plurality of reinforcement elements (130), proximate to at least one of the edges (108, 110) of the web-like body (102) is segmented.

2. The spoke (100) for a non-pneumatic wheel (50) as in claim 1, wherein the plurality of elongate reinforcement elements (130) comprises a plurality of inextensible cords (130).

3. The spoke (100) for a non-pneumatic wheel (50) as in any one of the above claims, wherein the at least one : reinforcement element comprises:
a plurality of inextensible cords (130) extending between the radially-outer end (104) and the radially-inner end (106); and
at least one pair of layers (132, 134, 136, 138) comprising a polymeric material, wherein the layers (132, 134, 136, 138) extend between the radially-outer end (104) and the radially inner end (106) with the inextensible cords (130) embedded between the layers (132, 134, 136, 138).

4. The spoke (100) for a non-pneumatic wheel (50) as in claim 3, wherein the inextensible cords (130) comprise steel.

5. The spoke (100) for a non-pneumatic wheel (50) as in claim 3, wherein the inextensible cords (130) comprise fiber reinforced polymer.

6. The spoke (100) for a non-pneumatic wheel (50) as in any one of claims 1 to claim 2, wherein the at least one reinforcement element comprises:
a plurality of inextensible cords (130) extending between the radially-outer end (104) and the radially-inner end (106); and
a first pair of layers (136, 138) comprising a first polymeric material, wherein the first pair of layers (136, 138) extend between the radially-outer end (104) and the radially-inner end (106) with the inextensible cords (130) embedded between the first pair layers (136, 138); and
a second pair of layers (132, 134) comprising a second polymeric material, wherein the second pair of layers (132, 134) extend between the radially-outer end (104) and the radially-inner end (106).

7. The spoke (100) for a non-pneumatic wheel (50) as in claim 3, wherein the first polymeric material has an elongation modulus MA10 measured at 10 percent elongation and at a temperature of 23 °C that is in the range of 1 to 10 MPa.

8. The spoke (100) for a non-pneumatic wheel (50) as in claim 6, wherein the second polymeric material has an elongation modulus MA10 measured at 10 percent elongation and at a temperature of 23 °C that is in the range of 1 to 5 MPa.

9. The spoke (100) for a non-pneumatic wheel (50) as in any one of the above claims, wherein a plurality of reinforcement elements (130) proximate to each edge (108, 110) of the web-like body (102) are segmented.

10. The spoke (100) for a non-pneumatic wheel (50) as in any one of the above claims, wherein the outer anchor (112) further comprises an outer pair of arms (116, 118) extending in an opposing manner along the circumferential direction (C) away from the web-like body (102) and wherein the inner anchor (114) further comprises an inner pair of arms (120, 122) extending in an opposing manner along the circumferential direction (C) away from the web-like body (102).

11. The spoke (100) for a non-pneumatic wheel (50) as in any one of the above claims, wherein along the axial direction (A) between the opposing edges (108, 110) the web-like body (102) has a width that increases along the radial direction (R) from the radially-inner end (106) to the radially-outer end (104).

12. The spoke (100) for a non-pneumatic wheel (50) as in any one of the above claims, wherein the outer anchor (112) comprises a polymeric material having an elongation modulus MA10 measured at 10 percent elongation and at a temperature of 23 °C that is in the range of 10 to 30 MPa.

13. The spoke (100) for a non-pneumatic wheel (50) as in any one of the above claims, wherein the inner anchor (114) comprises a polymeric material having an elongation modulus MA10 measured at 10 percent elongation and at a temperature of 23 °C that is in the range of 20 to 60 MPa.

14. The spoke (100) for a non-pneumatic wheel (50) as in any one of the above claims, wherein the spoke (100) is comprised of multiple segments that together span laterally across the wheel (50).

15. The spoke (100) for a non-pneumatic wheel (50) as in claim 14 wherein the multiple segments are connected at the inner anchor (114) or the outer anchor (112).

## Patentansprüche

1. Speiche (100) für ein nichtpneumatisches Rad (50), die eine radiale, axiale und umfängliche Richtung (A, R, C) definiert, wobei die Speiche (100) umfasst:
einen stegartigen Körper (102), der sich entlang der radialen Richtung (R) zwischen einem radial äußeren Ende (104) und einem radial inneren Ende (106) erstreckt, und sich entlang einer axialen Richtung (A) zwischen entgegengesetzten Kanten (108, 110) des stegartigen Körpers (102) erstreckt, wobei der stegartige Körper (102) eine Verstärkungsstruktur umfasst, die eine Vielzahl länglicher Verstärkungselemente (130) beinhaltet, die sich parallel zueinander zwischen dem radial äußeren Ende (104) und dem radial inneren Ende (106) erstrecken;
einen äußeren Anker (112), der an dem radial äußeren Ende (104) positioniert ist; und
einen inneren Anker (114), der an dem radial inneren Ende (106) positioniert ist;
**dadurch gekennzeichnet, dass** mindestens ein Verstärkungselement der Vielzahl von Verstärkungselementen (130) nahe mindestens einer der Kanten (108, 110) des stegartigen Körpers (102) segmentiert ist.

2. Speiche (100) für ein nichtpneumatisches Rad (50) nach Anspruch 1, wobei die Vielzahl länglicher Verstärkungselemente (130) eine Vielzahl nicht dehnbarer Schnüre (130) umfasst.

3. Speiche (100) für ein nichtpneumatisches Rad (50) nach einem der vorstehenden Ansprüche, wobei das mindestens eine Verstärkungselement Folgendes umfasst:
eine Vielzahl nicht dehnbarer Schnüre (130), die sich zwischen dem radial äußeren Ende (104) und dem radial inneren Ende (106) erstrecken; und
mindestens ein Paar von Schichten (132, 134, 136, 138), die ein Polymermaterial umfassen, wobei sich die Schichten (132, 134, 136, 138) zwischen dem radial äußeren Ende (104) und dem radial inneren Ende (106) mit den nicht dehnbaren Schnüren (130) zwischen den Schichten (132, 134, 136, 138) eingebettet erstrecken.

4. Speiche (100) für ein nichtpneumatisches Rad (50) nach Anspruch 3, wobei die nicht dehnbaren Schnüre (130) Stahl umfassen.

5. Speiche (100) für ein nichtpneumatisches Rad (50) nach Anspruch 3, wobei die nicht dehnbaren Schnüre (130) faserverstärktes Polymer umfassen.

6. Speiche (100) für ein nichtpneumatisches Rad (50) nach einem der Ansprüche 1 bis Anspruch 2, wobei das mindestens eine Verstärkungselement Folgendes umfasst:
eine Vielzahl nicht dehnbarer Schnüre (130), die sich zwischen dem radial äußeren Ende (104) dem radial inneren Ende (106) erstrecken; und
ein erstes Paar von Schichten (136, 138), das ein erstes Polymermaterial umfasst, wobei sich das erste Paar von Schichten (136, 138) zwischen dem radial äußeren Ende (104) und dem radial inneren Ende (106) mit den nicht dehnbaren Schnüren (130) zwischen dem ersten Paar von Schichten (136, 138) eingebettet erstreckt;
ein zweites Paar von Schichten (132, 134), das ein zweites Polymermaterial umfasst, wobei sich das zweite Paar von Schichten (132, 134) zwischen dem radial äußeren Ende (104) und dem radial inneren Ende (106) erstreckt.

7. Speiche (100) für ein nichtpneumatisches Rad (50) nach Anspruch 3, wobei das erste Polymermaterial einen Dehnungsmodul MA10 aufweist, der bei 10 Prozent Dehnung und bei einer Temperatur von 23 °C gemessen wird, der in dem Bereich von 1 bis 10 MPa liegt.

8. Speiche (100) für ein nichtpneumatisches Rad (50) nach Anspruch 6, wobei das zweite Polymermaterial einen Dehnungsmodul MA10 aufweist, der bei 10 Prozent Dehnung und bei einer Temperatur von 23 °C gemessen wird, der in dem Bereich von 1 bis 5 MPa liegt.

9. Speiche (100) für ein nichtpneumatisches Rad (50) nach einem der vorstehenden Ansprüche, wobei eine Vielzahl von Verstärkungselementen (130) nahe jeder Kante (108, 110) des stegartigen Körpers (102) segmentiert ist.

10. Speiche (100) für ein nichtpneumatisches Rad (50) nach einem der vorstehenden Ansprüche, wobei der äußere Anker (112) ferner ein äußeres Paar von Armen (116, 118) umfasst, das sich in einer entgegengesetzten Weise entlang der Umfangsrichtung (C) von dem stegartigen Körper (102) weg erstreckt, und wobei der innere Anker (114) ferner ein inneres Paar von Armen (120, 122) umfasst, das sich in einer entgegengesetzten Weise entlang der Umfangsrichtung (C) von dem stegartigen Körper (102) weg erstreckt.

11. Speiche (100) für ein nichtpneumatisches Rad (50) nach einem der vorstehenden Ansprüche, wobei entlang der axialen Richtung (A) zwischen den entgegengesetzten Enden (108, 110) der stegartige Körper (102) eine Breite aufweist, die entlang der radialen Richtung (R) von dem radial inneren Ende (106) zu dem radial äußeren Ende (104) zunimmt.

12. Speiche (100) für ein nichtpneumatisches Rad (50) nach einem der vorstehenden Ansprüche, wobei der äußere Anker (112) ein Polymermaterial umfasst, das einen Dehnungsmodul MA10 aufweist, der bei 10 Prozent Dehnung und bei einer Temperatur von 23 °C gemessen wird, der in dem Bereich von 10 bis 30 MPa liegt.

13. Speiche (100) für ein nichtpneumatisches Rad (50) nach einem der vorstehenden Ansprüche, wobei der innere Anker (114) ein Polymermaterial umfasst, das einen Dehnungsmodul MA10 aufweist, der bei 10 Prozent Dehnung und einer Temperatur von 23 °C gemessen wird, der in dem Bereich 20 bis 60 MPa liegt.

14. Speiche (100) für ein nichtpneumatisches Rad (50) nach einem der vorstehenden Ansprüche, wobei die Speiche (100) aus mehreren Segmenten besteht, die gemeinsam das Rad (50) seitlich überspannen.

15. Speiche (100) für ein nichtpneumatisches Rad (50) nach Anspruch 14, wobei die mehreren Segmente an dem inneren Anker (114) oder dem äußeren Anker (112) verbunden sind.

## Revendications

1. Rayon (100) pour une roue non pneumatique (50) définissant des directions radiale, axiale et circonférentielle (A, R, C), le rayon (100) comprenant :
un corps de type bande (102) s'étendant le long de la direction radiale (R) entre une extrémité radialement extérieure (104) et une extrémité radialement intérieure (106) et s'étendant le long d'une direction axiale (A) entre des bords opposés (108, 110) du corps de type bande (102), le corps de type bande (102) comprenant une structure de renforcement incluant une pluralité d'éléments de renforcement allongés (130) s'étendant parallèlement les uns aux autres s'étendant entre l'extrémité radialement extérieure (104) et l'extrémité radialement intérieure (106) ;
un élément d'ancrage extérieur (112) positionné à l'extrémité radialement extérieure (104) ; et
un élément d'ancrage intérieur (114) positionné à l'extrémité radialement intérieure (106) ;
**caractérisé en ce qu'**au moins un élément de renforcement de la pluralité d'éléments de renforcement (130), à proximité d'au moins un des bords (108, 110) du corps de type bande (102) est segmenté.

2. Rayon (100) pour une roue non pneumatique (50) selon la revendication 1, dans lequel la pluralité d'éléments de renforcement allongés (130) comprend une pluralité de cordes inextensibles (130).

3. Rayon (100) pour une roue non pneumatique (50) selon l'une quelconque des revendications précédentes, dans lequel l'au moins un élément de renforcement comprend :
une pluralité de cordes inextensibles (130) s'étendant entre l'extrémité radialement extérieure (104) et l'extrémité radialement intérieure (106) ; et
au moins une paire de couches (132, 134, 136, 138) comprenant un matériau polymère, dans lequel les couches (132, 134, 136, 138) s'étendent entre l'extrémité radialement extérieure (104) et l'extrémité radialement intérieure (106) avec les cordes inextensibles (130) intégrées entre les couches (132, 134, 136, 138).

4. Rayon (100) pour une roue non pneumatique (50) selon la revendication 3, dans lequel les cordes inextensibles (130) comprennent de l'acier.

5. Rayon (100) pour une roue non pneumatique (50) selon la revendication 3, dans lequel les cordes inextensibles (130) comprennent du polymère renforcé par des fibres.

6. Rayon (100) pour une roue non pneumatique (50) selon l'une quelconque des revendications 1 à la revendication 2, dans lequel l'au moins un élément de renforcement comprend :
une pluralité de cordes inextensibles (130) s'étendant entre l'extrémité radialement extérieure (104) et l'extrémité radialement intérieure (106) ; et
une première paire de couches (136, 138) comprenant un premier matériau polymère, dans lequel la première paire de couches (136, 138) s'étend entre l'extrémité radialement extérieure (104) et l'extrémité radialement intérieure (106) avec les cordes inextensibles (130) intégrées entre la première paire de couches (136, 138) ; et
une seconde paire de couches (132, 134) comprenant un second matériau polymère, dans lequel la seconde paire de couches (132, 134) s'étend entre l'extrémité radialement extérieure (104) et l'extrémité radialement intérieure (106).

7. Rayon (100) pour une roue non pneumatique (50) selon la revendication 3, dans lequel le premier matériau polymère présente un module d'allongement MA 10 mesuré à 10 pour cent d'allongement et à une température de 23 °C qui est dans la plage de 1 à 10 MPa.

8. Rayon (100) pour une roue non pneumatique (50) selon la revendication 6, dans lequel le second matériau polymère présente un module d'allongement MA 10 mesuré à 10 pour cent d'allongement et à une température de 23 °C qui est dans la plage de 1 à 5 MPa.

9. Rayon (100) pour une roue non pneumatique (50) selon l'une quelconque des revendications précédentes, dans lequel une pluralité d'éléments de renforcement (130) à proximité de chaque bord (108, 110) du corps de type bande (102) est segmentée.

10. Rayon (100) pour une roue non pneumatique (50) selon l'une quelconque des revendications précédentes, dans lequel l'élément d'ancrage extérieur (112) comprend en outre une paire extérieure de bras (116, 118) s'étendant de manière opposée le long de la direction circonférentielle (C) loin du corps de type bande (102) et dans lequel l'élément d'ancrage intérieur (114) comprend en outre une paire intérieure de bras (120, 122) s'étendant de manière opposée le long de la direction circonférentielle (C) loin du corps de type bande (102).

11. Rayon (100) pour une roue non pneumatique (50) selon l'une quelconque des revendications précédentes, dans lequel le long de la direction axiale (A) entre les bords opposés (108, 110), le corps de type bande (102) présente une largeur qui augmente le long de la direction radiale (R) depuis l'extrémité radialement intérieure (106) à l'extrémité radialement extérieure (104).

12. Rayon (100) pour une roue non pneumatique (50) selon l'une quelconque des revendications précédentes, dans lequel l'élément d'ancrage extérieur (112) comprend un matériau polymère ayant un module d'allongement MA10 mesuré à 10 pour cent d'allongement et à une température de 23 °C qui est dans la plage de 10 à 30 MPa.

13. Rayon (100) pour une roue non pneumatique (50) selon l'une quelconque des revendications précédentes, dans lequel l'élément d'ancrage intérieur (114) comprend un matériau polymère ayant un module d'allongement MA10 mesuré à 10 % d'allongement et à une température de 23 °C qui est dans la plage de 20 à 60 MPa.

14. Rayon (100) pour une roue non pneumatique (50) selon l'une quelconque des revendications précédentes, dans lequel le rayon (100) est constitué de multiples segments qui couvrent ensemble latéralement la roue (50).

15. Rayon (100) pour une roue non pneumatique (50) selon la revendication 14, dans lequel les multiples segments sont reliés au niveau de l'élément d'ancrage intérieur (114) ou de l'élément d'ancrage extérieur (112).
